# EUROPEAN PATENT SPECIFICATION

(11) **EP 2 555 411 B1**
(45) Date of publication and mention of the grant of the patent: **12.06.2013**
(21) Application number: 11382267.0
(22) Date of filing: 03.08.2011
(51) Int. Cl.: H02M 7/487

(54) **Power converting apparatus**
Leistungsumwandler
Convertisseur de puissance

(43) Date of publication of application: 06.02.2013
(73) Proprietor: Ingeteam Technology S.A., 48170 Zamudio (ES)
(72) Inventor: Oteiza Izcue, David, 48170 Zamudio (ES); Chivite Zabalza, Francisco Javier, 48170 Zamudio (ES); Milicua Urcelay, Aritz, 48170 Zamudio (ES); Madariaga Zubimendi, Danel, 48170 Zamudio (ES); Izurza Moreno, Pedro, 48170 Zamudio (ES); Alvarez Hidalgo, Silverio, 48170 Zamudio (ES)
(74) Representative: Igartua, Ismael

(56) References cited:
- EP-A1- 1 513 249
- US-A- 5 627 742

## Description

### TECHNICAL FIELD

This invention relates to power converting apparatuses that are adapted to convert a direct-voltage power supply into an alternating-voltage power supply, and which also comprise a controller for balancing voltage at a capacitive mid-point.

### PRIOR ART

Power converting apparatuses that are adapted to convert a direct-voltage power supply into an alternating-voltage power supply comprise at least one converter that has the function of performing said action. The quality of the output voltage wave increases with the number of levels it comprises, although a greater number of levels results in greater complexity in the implementation of the converter, so that industrial applications are usually based on apparatuses with converters with a maximum of up to two or three levels.

In three-level converters in particular, the converter comprises two capacitors in series on the direct-voltage side, so that three voltage levels are obtained from a direct voltage: an intermediate level or zero potential at a connection mid-point between both capacitors; a positive level or potential, corresponding to the voltage in a capacitor in relation to the mid-point, and a negative level or potential, corresponding to the value of the voltage of the other capacitor in relation to the mid-point. The converter comprises a plurality of switches that are opened or closed in a controlled manner in order to provide, in a selective manner, the three voltage levels to the alternating-voltage side of the converter.

However, the drawback with multi-level converters is that the voltages of the capacitors of the direct-voltage side can become imbalanced in relation to the mid-point, due to an excess in current towards one or another capacitor.

Document US 7573732 B2 discloses a power converting apparatus in which the voltage is balanced at the mid-point by using at least one additional element to absorb or consume the excess power generated at the mid-point. Said element, which can be for example a resistor, absorbs or consumes the excess current that runs towards one of the capacitors, so that it allows the voltage to remain balanced at the mid-point.

Document US 5627742 A discloses a power converting apparatus with a three-level converter, in which the voltage is balanced at the mid-point without additional elements being used. In the apparatus disclosed in this document the control of apparatus itself is acted on in order to obtain the balance, the modulation used in the apparatus itself being acted on, taking into account the polarity of the output current of the apparatus, which corresponds to the current of each phase of the three-phase alternating-voltage signal generated by the converter.

### BRIEF DISCLOSURE OF THE INVENTION

It is an object of the invention to provide a power converting apparatus as described in the claims.

Power converting apparatus comprising a plurality of capacitors disposed in series on the direct-voltage side, and an electronic power converter for converting the direct voltage supplied by the capacitors into at least one multi-level alternating-voltage signal by means of a certain modulation. The alternating-voltage signal comprises at least one phase represented by a voltage wave that comprises a plurality of voltage levels, the number of levels depending on the number of capacitors disposed in series on the direct-voltage side, going from one level to another by means of an edge dependent on the modulation.

The apparatus also comprises a controller for modifying the current at a connection mid-point between every two capacitors, in order to balance the voltage at the corresponding mid-point, in accordance with the direction of the slope and the value of at least one output current of apparatus, the value or magnitude of the imbalance at the mid-point, and also taking into account which of the two capacitors between which the mid-point is disposed comprises a greater voltage.

The controller is adapted to displace at least one edge of the corresponding voltage wave, in one direction or another in accordance with the direction of the slope of the corresponding output current and in accordance with which of the two capacitors between which the mid-point is disposed comprises a greater voltage, to modify the current at the mid-point, said edge being displaced a determined angle that depends on the value of the corresponding output current and on the value or magnitude of the imbalance. The controller displaces an edge of the corresponding voltage wave backwards if the direction of the slope of the corresponding output current is positive and forward if the direction of the slope of the corresponding output current is negative, when the capacitor with the greater voltage is the top capacitor, and it displaces an edge of the corresponding voltage wave forward if the direction of the slope of the corresponding output current is positive and backwards if the direction of the slope of the corresponding output current is negative, when the capacitor with the greater voltage is the bottom capacitor.

As a result, charges are correctly discharged or injected in the capacitors on the direct-voltage side, the voltage being balanced at the mid-point in an effective manner.

These and other advantages and characteristics of the invention will be made evident in the light of the drawings and the detailed description thereof.

### DESCRIPTION OF THE DRAWINGS

Figure 1 schematically shows a preferred embodiment of the apparatus of the invention, which comprises two capacitors on the direct-voltage side and a converter for converting the direct voltage into a three-phase alternating-voltage signal.
Figure 2 shows a voltage wave representative of a phase of the alternating-voltage signal generated by a converter of the apparatus of Figure 1.
Figure 3 shows the voltage wave of Figure 2 and a corresponding output current in phase, for a positive imbalance.
Figure 4 shows the voltage wave of Figure 2 and a corresponding output current in phase, for a negative imbalance.
Figure 5 shows a quadrant of the voltage wave of Figure 2, where the displacement of edges present in said quadrant is represented.

### DETAILED DISCLOSURE OF THE INVENTION

The power converting apparatus of the invention comprises a plurality of capacitors disposed in series on the direct-voltage DC side, and an electronic power converter 1 for converting a direct voltage supplied by the capacitors into at least one multi-level alternating-voltage signal by means of a determined modulation, the alternating-voltage signal comprising a single phase or a plurality of phases.

In a preferred embodiment the alternating-voltage signal corresponds to a three-phase alternating-voltage signal comprising three phases A, B and C, each phase A, B and C being represented by an alternating voltage wave 4. Each voltage wave 4 comprises a plurality of voltage levels, the number of levels depending on the number of capacitors disposed in series on the direct-voltage side, going from one level to another by means of an edge 2 dependent on the modulation. If the apparatus comprises two capacitors for example, each voltage wave 4 comprises three voltage levels, if said apparatus comprises four capacitors for example, each voltage wave 4 comprises five voltage levels, and so on. Generally speaking, each voltage wave 4 comprises as many voltage levels as the number of capacitors the apparatus comprises, plus one.

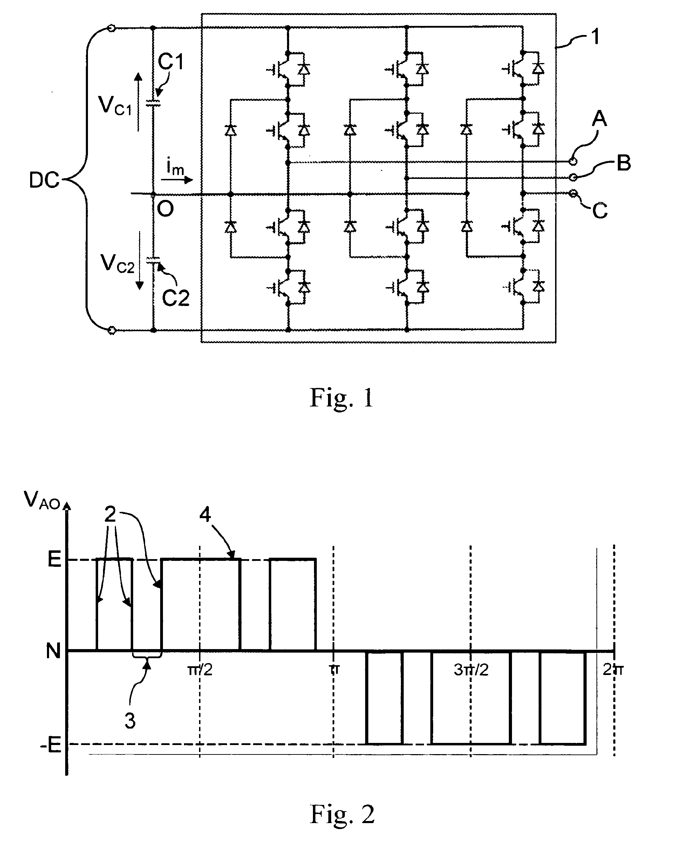

Figure 1 shows the preferred embodiment of the apparatus by way of example, which comprises two capacitors C1 and C2 connected in series on the direct-voltage side, so that each voltage wave 4 representative of the phases A, B and C of the alternating-voltage signal generated by the converter 1 comprises three voltage levels: a zero potential N that corresponds to the mid-point O, a positive potential E that corresponds to the maximum voltage of a capacitor C1 in relation to the mid-point O, and a negative potential -E that corresponds to the maximum voltage of the capacitor C2 in relation to the mid-point O. Figure 2 shows, by way of example, a voltage wave 4 representative of a phase A of the alternating-voltage signal generated by the converter 1 of the preferred embodiment of the apparatus, where the three voltage levels E, N and -E are clearly identified. The voltage waves of the two remaining phases B and C of the alternating-voltage signal generated by the converter 1 in the preferred embodiment are substantially equal to the voltage wave 4 of the phase A shown in Figure 2, although the voltage waves of the three phases A, B and C are out of phase by approximately 120° (3π/2 radians) from each other.

The converter 1 can use different types of known modulations to generate the alternating-voltage signal, such as the pulse-width modulation (PWM) and the selective harmonic elimination (SHE) modulation for example. In the preferred embodiment, the modulation used to obtain the phase A shown in Figure 2 is a three-angle SHE modulation, the phase A comprising three edges 2 in each complete quarter-cycle or quadrant (every 90° or every π/2 radians), so that harmonic orders five and seven in the alternating-voltage signal are eliminated. In any case the same SHE modulation can be used but with different angles or with more angles, or another modulation such as the PWM modulation for example.

The apparatus comprises a controller which can comprise a micro-processor, a micro-controller, an FPGA or an equivalent device with the capacity to process signals, in order to modify a current iₘ at a connection mid-point O between every two capacitors in accordance with the direction of the slope, the value of an output current of the apparatus and of the value or magnitude of the imbalance, in order to balance the voltage at the corresponding mid-point O. The output current corresponds to the current per phase of the alternating-voltage signal generated by the converter 1, so that in the preferred embodiment the controller is adapted to act on the voltage waves 4 of the three phases A, B and C of the alternating-voltage signal to balance the voltage of the mid-point O, taking into account for each phase A, B and C its corresponding output current. Preferably, the different phases A, B and C are acted on in the same manner by applying the same modification, although each phase A, B and C can also be controlled in an independent manner.

The controller is adapted to determine if there is an imbalance at the mid-point O or not. In the preferred embodiment the controller is capable of determining the voltage V_{C1} in the capacitor C1 and the voltage V_{C2} in the capacitor C2 directly or by means of voltage detectors that are communicated with the controller for example, determining the magnitude of the imbalance and the direction of said imbalance in accordance with said voltages V_{C1} and V_{C2}. It thus determines that an imbalance is positive if the voltage V_{C1} in the top capacitor C1 is greater than the voltage V_{C2} in the bottom capacitor C2 (V_{C1} > V_{C2}), and determines that an imbalance is negative if the voltage V_{C2} in the bottom capacitor C2 is greater than the voltage V_{C1} in the top capacitor C1 (V_{C1} < V_{C2}). The way of detecting an imbalance is not limiting, any other method known in the prior art being also possible to be used.

When it is determined that there is an imbalance at the mid-point O, the controller displaces at least one edge 2 of the corresponding voltage wave 4, the balancing of the mid-point O being obtained, at least to a large extent, thanks to said displacement. The displacement is made in one direction or another in accordance with the direction of the slope of the corresponding output current and in accordance with the direction of the imbalance (positive or negative), and the edge 2 is displaced a determined angle S that depends on the value of the corresponding output current and on the value or magnitude of the imbalance.

Thanks to the displacement of the edge 2 (or the edges 2) the current iₘ is modified at the mid-point O in a direction and value suitable for eliminating the imbalance generated in it, which causes the correct discharge or injection of charges in the capacitors on the direct-voltage side in order to compensate the imbalance. In the preferred embodiment each phase A, B and C provides current at the mid-point O in discharge areas 3 in which the voltage of the corresponding phase A, B and C is equal to the neutral potential N. As a result, by moving an edge 2 (or more edges 2) the point at which the corresponding phase A, B or C provides current to said mid-point O is modified, it being possible to compensate the imbalance at said mid-point O.

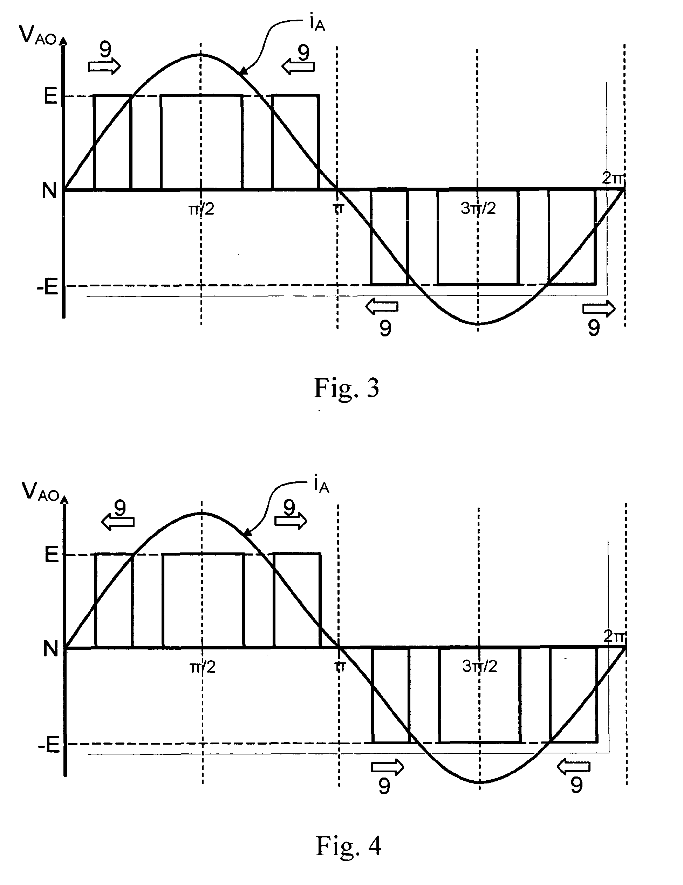

If the imbalance is positive, the controller is adapted to displace an edge 2 of the corresponding voltage wave 4 backwards if the direction of the slope of the corresponding output current is positive or upwards, and to displace said edge 2 forward if the direction of the slope of the corresponding output current is negative or downwards, as shown by way of example in Figure 3, where the direction of displacement of the edges per quadrant is indicated by means of an arrow 9 and where the phase difference between the voltage wave 4 and the corresponding output current i_{A} is zero. If the imbalance is negative, the controller is adapted to displace an edge 2 of the corresponding voltage wave 4 backwards if the direction of the slope of the corresponding output current is negative or downwards, and to displace said edge 2 forward if the direction of the slope of the corresponding output current is positive or upwards, as shown by way of example in Figure 4, where the direction of displacement of the edges per quadrant is indicated by means of an arrow 9 and where the phase difference between the voltage wave 4 and the corresponding output current i_{A} is zero.

The direction of the slope of an output current can be determined, for example, in accordance with the angle of said current, and said angle can also be determined in different ways, such as by means of a detection or direct measurement of the current, or taking into account the corresponding voltage wave 4 and the angle of phase difference between said voltage wave 4 and the current, the angle of the current being obtained thanks to said phase difference and the angle of the voltage wave 4.

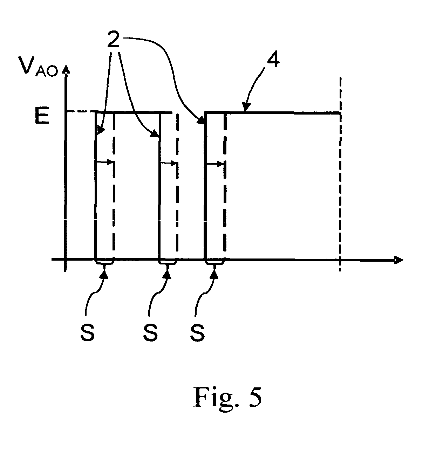

In one embodiment, if the phase difference between a voltage wave 4 and its corresponding output current is between 0° and 90° all the edges 2 of the corresponding voltage wave 4 in a single quadrant are displaced in the same direction, as shown by way of example in Figure 5, which shows the first quadrant of the voltage wave 4 of Figure 2, where the original edges 2 are depicted with continuous lines and the displaced edges 2 are depicted with broken lines. If the phase difference is different, each edge 2 is displaced in accordance with the slope of the output current at the moment at which said edge 2 should originally occur. For this purpose, a prediction of the direction of the slope of said output current can be made.

In another embodiment, the controller can be adapted to displace, in a direction determined by the slope of the corresponding output current, at least one edge 2 of the corresponding voltage wave 4 present in the first half of a complete cycle of said voltage wave 4, a complete cycle being understood as a period of 2π radians or 360°, the opposite edge 2 to 180° in a single complete cycle being displaced in the opposite direction. Each edge 2 is displaced in accordance with the slope of the output current at the moment at which said edge 2 should originally occur, and for this purpose a prediction of the slope of said output current can be made. In addition, the controller can be adapted to displace only one of said edges 2, preferably the edge 2 closest to the point at which the corresponding output current comprises a maximum amplitude.

The controller can also be adapted to determine the value of the corresponding output current per quadrant, providing the same angle S of displacement to all the edges 2 of a single quadrant that are displaced, or it can determine the value of the corresponding output current at all times, each edge 2 being displaced a determined angle S regardless of the angle S of displacement of the rest of the edges 2 that are displaced.

In the preferred embodiment the apparatus comprises two capacitors C1 and C2 on the direct-voltage side and generates a three-phase alternating-voltage signal, although it is evident that in other embodiments it can have a different number of phases (including a single phase) and/or a different number of capacitors. In the event that it comprises a single phase, the controller is adapted to act on it in the same way as described for the phases A, B and C of the preferred embodiment, as in other embodiments in which the alternating-voltage signal generated comprises a number of phases other than three.

## Claims

1. Power converting apparatus comprising a plurality of capacitors (C1, C2) disposed in series on the direct-voltage side, and an electronic power converter (1) for converting the direct voltage supplied by the capacitors (C1, C2) into at least one multi-level alternating-voltage signal by means of a determined modulation, the alternating-voltage signal comprising at least one phase represented by a voltage wave that comprises a plurality of voltage levels that depend on the number of capacitors (C1, C2) disposed in series on the direct-voltage side, going from one level to another by means of an edge (2) dependent on the modulation, **characterised in that** the apparatus also comprises a controller for modifying the current (iₘ) at an connection mid-point (O) between every two capacitors (C1, C2), in order to balance the voltage at the corresponding mid-point (O), in accordance with the direction of the slope and the value of at least one output current of the apparatus, the value or magnitude of the imbalance at the mid-point (O), and also taking into account which of the two capacitors (C1, C2) between which the mid-point (O) is disposed comprises a greater voltage (V_{C1}, V_{C2}), the controller being adapted to displace at least one edge (2) of the corresponding voltage wave (4), in one direction or another in accordance with the direction of the slope of the corresponding output current and in accordance with which of the two capacitors (C1, C2) between which the mid-point (O) is disposed comprises a greater voltage, to modify the current (iₘ) at the mid-point (O), said edge (2) being displaced a determined angle that depends on the value of the corresponding output current and on the value or magnitude of the imbalance, the controller displacing an edge (2) of the corresponding voltage wave (4) backwards if the direction of the slope of the corresponding output current is positive and forward if the direction of the slope of the corresponding output current is negative, if the capacitor (C1, C2) with the greater voltage is the top capacitor (C1), and displacing an edge (2) of the corresponding voltage wave (4) forward if the direction of the slope of the corresponding output current is positive and backwards if the direction of the slope of the corresponding output current is negative, if the capacitor (C1, C2) with the greater voltage is the bottom capacitor (C2).

2. Apparatus according to claim 1, wherein the controller is adapted to determine the direction of the slope of the output current in accordance with the instantaneous angle of said output current.

3. Apparatus according to any of claims 1 or 2, wherein the controller is adapted to displace, in a direction determined by the slope of the corresponding output current, at least one edge (2) of the corresponding voltage wave (4) present in the first half of a complete cycle of said voltage wave (4), the opposite edge (2) to 180° in the same complete cycle being displaced in the opposite direction.

4. Apparatus according to claim 3, wherein the controller is adapted to displace the edge (2) of the corresponding voltage wave (4) present in the first half of a complete cycle of said voltage wave (4) that is closest to the point at which the corresponding output current comprises the maximum amplitude.

5. Apparatus according to any of claims 1 to 4, wherein the controller is adapted to determine the value of the corresponding output current per quadrant, providing the same angle (S) of displacement to all the edges (2) of a single quadrant.

6. Apparatus according to any of claims 1 to 4, wherein the controller is adapted to determine the value of the corresponding output current at all times, each edge (2) being displaced a determined angle (S) regardless of the angle (S) of displacement of the rest of the edges (2) that are displaced.

7. Apparatus according to any of the preceding claims, wherein the converter (1) is adapted to convert the direct voltage supplied by the capacitors (C1, C2) into at least one three-phase alternating-voltage signal, a voltage wave (4) corresponding to each phase (A, B, C) of said three-phase alternating-voltage signal.

## Patentansprüche

1. Leistungsumwandlungsvorrichtung, umfassend eine Vielzahl von Kondensatoren (C1, C2), die in Reihe auf der Gleichspannungsseite angeordnet ist, und einen elektrischen Leistungsumwandler (1), um die Gleichspannung, geliefert von den Kondensatoren (C1, C2), mit Hilfe einer bestimmten Modulation in mindestens ein mehrstufiges Wechselspannungssignal umzuwandeln, wobei das Wechselspannungssignal mindestens eine Phase umfasst, die von einer Spannungswelle dargestellt ist, die eine Vielzahl von Spannungspegeln umfasst, die von der Anzahl von Kondensatoren (C1, C2) abhängt, angeordnet in Reihe auf der Gleichspannungsseite, die von einem Pegel zu einem anderen mit Hilfe einer Kante (2), abhängig von der Modulation, reicht, **dadurch gekennzeichnet, dass** die Vorrichtung auch eine Steuerungsvorrichtung umfasst, um den Strom (iₘ) an einem Verbindungs-Mittelpunkt (0) zwischen jeweils zwei Kondensatoren (C1, C2) zu modifizieren, um die Spannung am entsprechenden Mittelpunkt (O) auszugleichen, in Übereinstimmung mit der Richtung des Gefälles und des Werts von mindestens einem Ausgangsstrom der Vorrichtung, dem Wert oder der Größe des Ungleichgewichts am Mittelpunkt (O), und auch unter Berücksichtigung dessen, welcher der zwei Kondenstoren (C1, C2), zwischen denen der Mittelpunkt (O) angebracht ist, eine größere Spannung (V_{C1}, V_{C2}) umfasst, wobei die Steuerungsvorrichtung ausgelegt ist, um mindestens eine Kante (2) der entsprechenden Spannungswelle (4) in die eine oder in die andere Richtung zu verschieben, in Übereinstimmung mit der Richtung des Gefälles des entsprechenden Ausgangsstroms, und in Übereinstimmung damit, welcher der zwei Kondensatoren (C1, C2), zwischen denen der Mittelpunkt (O) angebracht ist, eine größere Spannung umfasst, um den Strom (im) am Mittelpunkt (O) zu modifizieren, wobei die Kante (2) um einen bestimmten Winkel verschoben wird, der vom Wert des entsprechenden Ausgangsstroms und vom Wert oder der Größe des Ungleichgewichts abhängt, wobei die Steuerungsvorrichtung eine Kante (2) der entsprechenden Spannungswelle (4) nach hinten verschiebt, wenn die Richtung des Gefälles des entsprechenden Ausgangsstroms positiv ist, und nach vorne, wenn die Richtung des Gefälles des entsprechenden Ausgangsstroms negativ ist, wenn der Kondensator (C1, C2) mit der größeren Spannung (C1) der obere Kondensator (C1) ist, und eine Kante (2) der entsprechenden Spannungswelle (4) nach vorne verschiebt, wenn die Richtung des Gefälles des entsprechenden Ausgangsstroms positiv ist, und nach hinten, wenn die Richtung des Gefälles des entsprechenden Ausgangsstroms negativ ist, wenn der Kondensator (C1, C2) mit der größeren Spannung der untere Kondensator (C2) ist.

2. Gerät nach Anspruch 1, wobei die Steuerungsvorrichtung ausgelegt ist, um die Richtung des Gefälles des Ausgangsstroms in Übereinstimmung mit dem momentanen Winkel des Ausgangsstroms zu bestimmen.

3. Gerät nach einem der Ansprüche 1 oder 2, wobei die Steuerungsvorrichtung ausgelegt ist, um in einer Richtung, die von dem Gefälle des entsprechenden Ausgangsstroms bestimmt wird, mindestens eine Kante (2) der entsprechenden Spannungswelle (4), die in der ersten Hälfte eines vollständigen Zyklus der Spannungswelle (4) vorhanden ist, zu verschieben, wobei die 180° im gleichen vollständigen Zyklus gegenüber liegende Kante (2) in die entgegen gesetzte Richtung verschoben wird.

4. Gerät nach Anspruch 3, wobei die Steuerungsvorrichtung ausgelegt ist, um die Kante (2) der entsprechenden Spannungswelle (4), die in der ersten Hälfte eines vollständigen Zyklus der Spannungswelle (4) vorhanden ist, die dem Punkt, an dem der entsprechende Ausgangsstrom die maximale Amplitude umfasst, am nächsten ist, zu verschieben.

5. Gerät nach einem der Ansprüche 1 bis 4, wobei die Steuerungsvorrichtung ausgelegt ist, um den Wert des entsprechenden Ausgangsstroms pro Quadrant zu bestimmen, wobei der gleiche Verschiebungswinkel (S) allen Kanten (2) eines einzigen Quadranten bereitgestellt wird.

6. Gerät nach einem der Ansprüche 1 bis 4, wobei die Steuerungsvorrichtung ausgelegt ist, um den Wert des entsprechenden Ausgangsstroms jederzeit zu bestimmen, wobei jede Kante (2) um einen bestimmten Winkel (S) verschoben wird, unabhängig vom Verschiebungswinkel (S) der restlichen Kanten (2), die verschoben werden.

7. Verfahren nach einem der vorhergehenden Ansprüche, wobei der Leistungsumwandler (1) ausgelegt ist, um die Gleichspannung, geliefert von den Kondensatoren (C1, C2), in mindestens ein Dreiphasen-Wechselspannungssignal umzuwandeln, wobei eine Spannungswelle (4) jeder Phase (A, B, C) des Dreiphasen-Wechselspannungssignals entspricht.

## Revendications

1. Dispositif de conversion de puissance comprenant une pluralité de condensateurs (C1, C2) placés en série côté tension continue, et un convertisseur électronique de puissance (1) destiné à convertir la tension continue fournie par les condensateurs (C1, C2) en au moins un signal de tension alternative à plusieurs niveaux au moyen d'une modulation déterminée, le signal de tension alternative comprenant au moins une phase représentée par une onde de tension qui comprend une pluralité de niveaux de tension qui sont fonction du nombre de condensateurs (C1, C2) placés en série côté tension continue, en allant d'un niveau à un autre au moyen d'un front (2) lié à la modulation, **caractérisé en ce que** le dispositif comprend également un régulateur destiné à modifier le courant (iₘ) en un point de connexion médian (O) entre deux condensateurs (C1, C2), afin d'équilibrer la tension au point médian (O) correspondant, en fonction du sens de la pente et de la valeur d'au moins un courant de sortie du dispositif, de la valeur ou de l'amplitude du déséquilibre au point médian (O), et en prenant également en compte celui des deux condensateurs (C1, C2) entre lesquels se trouve le point médian (O) qui comprend la tension (V_{C1}, V_{C2}) la plus élevée, le régulateur étant conçu pour déplacer au moins un front (2) de l'onde de tension correspondante (4), dans un sens ou dans un autre selon le sens de la pente du courant de sortie correspondant et en fonction de celui des deux condensateurs (C1, C2) entre lesquels se trouve le point médian (O) qui comprend la tension la plus élevée, pour modifier le courant (iₘ) au point médian (O), ledit front (2) étant déplacé d'un angle déterminé qui est fonction de la valeur du courant de sortie correspondant et de la valeur ou de l'amplitude du déséquilibre, le régulateur déplaçant le front (2) de l'onde de tension correspondante (4) vers l'arrière si le sens de la pente du courant de sortie correspondant est positif et vers l'avant si le sens de la pente du courant de sortie correspondant est négatif, si le condensateur (C1, C2) ayant la tension la plus élevée est le condensateur supérieur (C1), et déplaçant le front (2) de l'onde de tension correspondante (4) vers l'avant si le sens de la pente du courant de sortie correspondant est positif et vers l'arrière si le sens de la pente du courant de sortie correspondant est négatif, si le condensateur (C1, C2) ayant la tension la plus élevée est le condensateur inférieur (C2).

2. Dispositif selon la revendication 1, dans lequel le régulateur est conçu pour déterminer le sens de la pente du courant de sortie en fonction de l'angle instantané dudit courant de sortie.

3. Dispositif selon l'une quelconque des revendications 1 ou 2, dans lequel le régulateur est conçu pour déplacer, dans un sens déterminé par la pente du courant de sortie correspondant, au moins un front (2) de l'onde de tension correspondante (4) présent dans la première moitié d'un cycle complet de ladite onde de tension (4), le front opposé (2) à 180 ° du même cycle complet étant déplacé dans le sens opposé.

4. Dispositif selon la revendication 3, dans lequel le régulateur est conçu pour déplacer le front (2) de l'onde de tension correspondante (4) présent dans la première moitié d'un cycle complet de ladite onde de tension (4) qui est le plus proche du point auquel le courant de sortie correspondant comprend l'amplitude maximale.

5. Dispositif selon l'une quelconque des revendications 1 à 4, dans lequel le régulateur est conçu pour déterminer la valeur du courant de sortie correspondant par quadrant, en fournissant le même angle (S) de déplacement à tous les fronts (2) d'un seul quadrant.

6. Dispositif selon l'une quelconque des revendications 1 à 4, dans lequel le régulateur est conçu pour déterminer la valeur du courant de sortie correspondant à tout instant, chaque front (2) étant déplacé d'un angle déterminé (S) quel que soit l'angle (S) de déplacement du reste des fronts (2) qui sont déplacés.

7. Dispositif selon l'une quelconque des revendications précédentes, dans lequel le convertisseur (1) est conçu pour convertir la tension continue fournie par les condensateurs (C1, C2) en au moins un signal de tension alternative triphasé, une onde de tension (4) correspondant à chaque phase (A, B, C) dudit signal de tension alternative triphasé.
